(19)

Europäisches
Patentamt
European
Patent Office
Office européen
des brevets

(11)  **EP 2 368 952 B1**

(12)  **EUROPEAN PATENT SPECIFICATION**

(45) Date of publication and mention
of the grant of the patent:
**23.07.2014  Bulletin 2014/30**

(51) Int Cl.:
*C09J 7/02* (2006.01)      *C09J 11/08* (2006.01)
*C08G 18/62* (2006.01)      *C08L 23/06* (2006.01)
*C08K 7/16* (2006.01)

(21) Application number: **11001318.2**

(22) Date of filing: **17.02.2011**

(54) **Base material for surface protective sheet and surface protective sheet**

Basismaterial für eine Oberflächenschutzfolie und Oberflächenschutzfolie

Matériau de base pour feuille de protection de surface et feuille de protection de surface

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **25.03.2010  JP 2010069184**

(43) Date of publication of application:
**28.09.2011  Bulletin 2011/39**

(73) Proprietor: **Nitto Denko Corporation
Ibaraki-shi,
Osaka 567-8680 (JP)**

(72) Inventors:
• **Hayashi, Keiji
Ibaraki-shi
Osaka 567-8680 (JP)**
• **Hanaki, Ikkou
Ibaraki-shi
Osaka 567-8680 (JP)**

• **Uchida, Shou
Ibaraki-shi
Osaka 567-8680 (JP)**
• **Yamato, Jiro
Ibaraki-shi
Osaka 567-8680 (JP)**
• **Takeda, Kouhei
Ibaraki-shi
Osaka 567-8680 (JP)**
• **Sawazaki, Ryohei
Ibaraki-shi
Osaka 567-8680 (JP)**

(74) Representative: **Müller-Boré & Partner
Patentanwälte PartG mbB
Friedenheimer Brücke 21
80639 München (DE)**

(56) References cited:
**WO-A1-96/20084      WO-A1-2007/148849
WO-A1-2010/135211    JP-A- 2007 261 052
JP-A- 2008 088 248    JP-A- 2009 208 416**

EP 2 368 952 B1

**Description**

The present invention relates to a base material for a surface protective sheet, and relates to a surface protective sheet.

Attempts have been conventionally made to protect the surfaces of metal plates such as a stainless plate, an aluminum plate, and a steel plate by temporarily attaching surface protective sheets upon processing, conveyance, or the like of the metal plates lest the surfaces of the metal plates should receive scratches (marks) and the like. Surface protective sheets each obtained by providing a pressure-sensitive adhesive layer for one surface of a base material film have been used as such surface protective sheets for metal plates. A vinyl chloride-based base material has been conventionally the mainstream of the base material of any such surface protective sheet. In recent years, however, withdrawal from vinyl chloride has been progressing from the viewpoint of environmental protection, and hence investigations have started to be conducted on the application of a polyolefin-based base material as an alternative base material to the vinyl chloride-based base material.

However, a surface protective sheet using the polyolefin-based base material is inferior in slipping property (slippage property) of its back surface to a surface protective sheet using the conventional vinyl chloride-based base material. In particular, when an operator laminates and stores a metal plate to which the former surface protective sheet has been attached, the back surface of the sheet and the metal plate having a considerable weight cause blocking or the like to further reduce the slipping property. As a result, the following problem arises. The operator has difficulty in pulling out the metal plate, and hence workability deteriorates as compared with the surface protective sheet using the vinyl chloride-based base material.

To cope with the above-mentioned problem, a surface protective sheet with its blocking resistance improved by, for example, reducing the amount of a low-crystalline component in a resin used in its base material has been disclosed (Japanese Patent Application Laid-open No. 2009-208416). However, the technology disclosed in Japanese Patent Application Laid-open No. 2009-208416 involves the following problem. As a propylene-based resin having a narrow molecular weight distribution is used as the resin used in the base material, the surface of the base material is smoothened to have reduced slipping property, and in contrast, pulling property reduces when an operator pulls out a metal plate.

In addition, a composition for a polypropylene film to which an inorganic fine particle anti-blocking agent is added has been disclosed (Japanese Patent Application Laid-open No. 2006-96939). However, the technology disclosed in Japanese Patent Application Laid-open No. 2006-96939 involves the following problem. As inorganic fine particles are present on the surface of the film, each particle functions like a file, and hence the surface of a metal plate laminated to contact the surface of the film is scratched when an operator pulls out the metal plate.

In addition, the incorporation of ultrahigh-molecular weight polyethylene particles into a resin used in a base material has been disclosed (Japanese Patent Application Laid-open No. 2008-88248). However, the ultrahigh-molecular weight polyethylene particles are mainly formed of large particles having an average particle diameter in excess of 20 μm, and the use of such large particles excessively improves slipping property instead. Further, an ultrahigh-molecular weight polyethylene itself is a resin having good slipping property, and hence such a problem that a laminated metal plate is, for example, displaced during its conveyance to cause danger arises. In addition, the production of a surface protective sheet by the incorporation of ultrahigh-molecular weight polyethylene particles each having a large particle diameter into the resin used in the base material involves the following problem. When the surface of the base material is a roll, the surface of the base material from which the ultrahigh-molecular weight polyethylene particles each having a large particle diameter protrude contacts a pressure-sensitive adhesive layer, and hence the surface of the pressure-sensitive adhesive layer roughens and the adhesion of the pressure-sensitive adhesive layer reduces.

In addition, a surface protective sheet with its slipping property improved by blending a polypropylene with an ethylene-vinyl acetate copolymer has been disclosed (Japanese Patent Application Laid-open No. 2003-213229). However, such surface protective sheet has small surface roughness as compared with that of a surface protective sheet to which particles are added, and hence involves the following problem. The surface protective sheet has nearly no effect on pulling property. In addition, the following problem arises. The surface protective sheet is poor in blocking resistance because the ethylene-vinyl acetate copolymer is a soft resin.

An object of the present invention is to provide the following base material for a surface protective sheet. The slipping property of the back surface of the sheet is moderately excellent, and scratches in the surface of an adherend laminated to contact the back surface of the sheet can be suppressed. Another object of the present invention is to provide a surface protective sheet containing such base material for a surface protective sheet.

The base material for a surface protective sheet of the present invention includes a base material layer (A), in which:

at least one surface of the base material for a surface protective sheet includes a surface of the base material layer (A);
the base material layer (A) contains a polyolefin-based resin as a main component;

the base material layer (A) contains polymer fine particles having an average particle diameter of 4 to 15 μm at a content of 1 to 20 wt% with respect to 100 parts by weight of the polyolefin-based resin;

the surface of the base material layer (A) has a surface roughness Ra of 0.15 to 0.60 μm; and

the surface of the base material layer (A) has a coefficient of dynamic friction (I) with respect to an aluminum plate of 0.35 to 1.00.

The above-mentioned polymer fine particles contain at least one kind selected from the group consisting of a cross-linked polymethyl (meth)acrylate, a cross-linked polybutyl (meth)acrylate, and a cross-linked polystyrene.

In a preferred embodiment, the base material for a surface protective sheet according to the present invention has a thickness of 20 to 300 μm.

In a preferred embodiment, the above-mentioned base material layer (A) contains the polyolefin-based resin at a content of 50 to 99.9 wt%.

According to another aspect of the present invention, a surface protective sheet is provided. The surface protective sheet of the present invention includes the base material for a surface protective sheet of the present invention and a pressure-sensitive adhesive layer.

In a preferred embodiment, the pressure-sensitive adhesive layer has a thickness of 0.5 to 50 μm.

In a preferred embodiment, the surface protective sheet according to the present invention is produced by a co-extrusion method.

In a preferred embodiment, the surface protective sheet according to the present invention protects the surface of a metal plate.

According to the present invention, there can be provided the following basematerialforasurface protective sheet. The slipping property of the back surface of the sheet is moderately excellent, and scratches in the surface of an adherend laminated to contact the back surface of the sheet can be suppressed. There can also be provided a surface protective sheet containing such base material for a surface protective sheet.

In each of the base material for a surface protective sheet of the present invention and the surface protective sheet of the present invention, the base material layer (A) contains the polyolefin-based resin as a main component, and the base material layer (A) contains the polymer fine particles each having a specific particle diameter. As a result, blocking resistance between the surface of the base material layer (A) and the surface of an adherend laminated to contact the surface is high, and slipping property is moderately excellent.

In each of the base material for a surface protective sheet of the present invention and the surface protective sheet of the present invention, the base material layer (A) contains the polymer fine particles softer than the adherend such as a stainless plate or an aluminum plate. As a result, scratches in the surface of the adherend laminated to contact the surface of the base material layer (A) can be suppressed. For example, scratches in the surface of the laminated adherend can be suppressed when an operator pulls out the adherend.

In each of the base material for a surface protective sheet of the present invention and the surface protective sheet of the present invention, the base material layer (A) contains the polymer fine particles each having a specific particle diameter. As a result, even when storage in a roll in a state in which the surface of the base material layer (A) and the pressure-sensitive adhesive layer contact each other is performed, the roughening of the surface of the pressure-sensitive adhesive layer can be suppressed, and the adhesion of the pressure-sensitive adhesive layer reduces to a small extent.

In the accompanying drawings:

FIG. **1** is a schematic sectional view of a base material for a surface protective sheet according to a preferred embodiment of the present invention;

FIG. **2** is a schematic sectional view of a base material for a surface protective sheet according to another preferred embodiment of the present invention;

FIG. **3** is a schematic sectional view of a surface protective sheet according to a preferred embodiment of the present invention; and

FIG. **4** is a schematic sectional view of a surface protective sheet according to another preferred embodiment of the present invention.

A. Base material for surface protective sheet

«Outline of base material for surface protective sheet»

A base material for a surface protective sheet of the present invention is a base material for a surface protective sheet including a base material layer (A), and at least one surface of the base material for a surface protective sheet is the surface of the base material layer (A). The base material for a surface protective sheet of the present invention may be a single-layer base material formed only of the base material layer (A), or may be a multilayer base material formed of the base material layer (A) and at least one other base material layer. When the base material for a surface protective sheet of the present invention is a multilayer base material, any appropriate number can be adopted as the number of layers depending on purposes. In the base material for a surface protective sheet of the present invention, at least one surface of the base material for a surface protective sheet is the surface of the base material layer (A). That is, when the base material for a surface protective sheet of the present invention is a multilayer base material formed of the base material layer (A) and at least one other base material layer, the base material layer (A) constitutes at least one of the outermost layers.

The base material for a surface protective sheet of the present invention has a thickness of preferably 20 to 300 $\mu$m, more preferably 20 to 250 $\mu$m, still more preferably 40 to 200 $\mu$m. When the thickness of the base material for a surface protective sheet of the present invention is smaller than 20 $\mu$m, the base material for a surface protective sheet of the present invention may break or tear upon use and peeling of a surface protective sheet of the present invention. When the thickness of the base material for a surface protective sheet of the present invention is larger than 300 $\mu$m, the stiffness of the base material for a surface protective sheet of the present invention is raised, and hence the lifting (rise) or the like of the surface protective sheet may be apt to occur after its attachment.

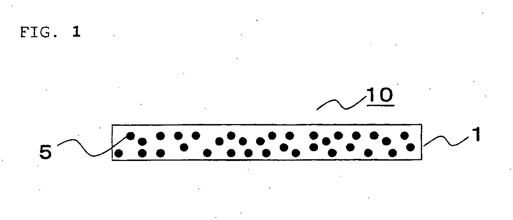

FIG. **1** is a schematic sectional view of a base material for a surface protective sheet according to a preferred embodiment of the present invention. The embodiment illustrated in FIG. **1** is an embodiment in which a base material **10** for a surface protective sheet is formed only of one layer, i.e., abase material layer (A) **1**. The base material layer (A) **1** contains polymer fine particles **5**.

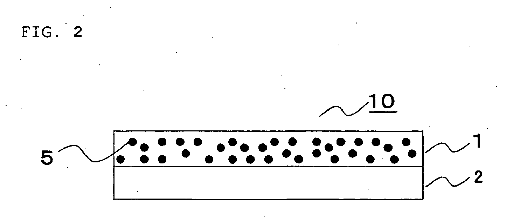

FIG. **2** is a schematic sectional view of a base material for a surface protective sheet according to another preferred embodiment of the present invention. The embodiment illustrated in FIG. **2** is an embodiment in which the base material **10** for a surface protective sheet is formed of two layers, i.e., the base material layer (A) **1** and another base material layer **2**. The base material layer (A) **1** contains the polymer fine particles **5**.

«Polymer fine particles»

The base material layer (A) in the base material for a surface protective sheet of the present invention contains the polymer fine particles. The base material layer (A) in the base material for a surface protective sheet of the present invention contains the polymer fine particles softer than an adherend such as a stainless plate or an aluminum plate. As a result, scratches in the surface of the adherend laminated to contact the surface of the base material layer (A) can be suppressed. For example, scratches in the surface of the laminated adherend can be suppressed when an operator pulls out the adherend.

Any appropriate resin particles can be adopted as the polymer fine particles to such an extent that an effect of the present invention is not impaired. Examples of such polymer fine particles include acrylic cross-linked particles, styrene-based cross-linked particles, polymer beads formed of other resins, and surface-treated bodies of them. Preferred specific examples of the acrylic cross-linked particles include particles formed of a cross-linked polymethyl (meth)acrylate and a cross-linked polybutyl (meth)acrylate. Preferred specific examples of the styrene-based cross-linked particles include particles formed of a cross-linked polystyrene. In the present invention, polymer fine particles of only one kind may be used, or polymer fine particles of two or more kinds may be used in combination, as the polymer fine particles.

The above-mentioned term "cross-linked" refers to a three-dimensional structure that can be formed by any appropriate cross-linking method. Any appropriate method can be adopted as a method of producing a cross-linked polymer such as the acrylic cross-linked particles or the styrene-based cross-linked particles depending on a raw material and applications. Examples of such method of producing a cross-linked polymer include: a method involving producing a polymer with a monomer having a cross-linking function; a method involving mixing a polymer with a catalyst such as a peroxide and heating the mixture to cross-link the polymer by a radical reaction; a method involving forming an ionic bond with a polymer having a polar group (such as C=O) and a metal; and a method involving applying an energy ray such as light or radiation to chemically bond part of a polymer.

In the present invention, commercially available products may be used as the polymer fine particles.

The polymer fine particles in the present invention have an average particle diameter of 4 to 15 $\mu$m, preferably 5 to 10 $\mu$m. When the average particle diameter of the polymer fine particles in the present invention is controlled so as to fall within the range of 3 to 20 $\mu$m, blocking resistance between the surface of the base material layer (A) and the surface of an adherend laminated to contact the surface is high, and slipping property is moderately excellent. In addition, even when storage in a roll in a state in which the surface of the base material layer (A) and the pressure-sensitive adhesive layer contact each other is performed, the roughening of the surface of the pressure-sensitive adhesive layer can be suppressed, and the adhesion of the pressure-sensitive adhesive layer reduces to a small extent.

When the average particle diameter of the polymer fine particles in the present invention is smaller than 3 $\mu$m, the blocking resistance between the surface of the base material layer (A) and the surface of the adherend laminated to contact the surface may be poor, or the slipping property may deteriorate. When the average particle diameter of the polymer fine particles in the present invention is larger than 20 μm, the slipping property becomes excessively good. Accordingly, when a metal plate or the like is laminated on the base material layer (A), plate displacement (such as an over size) may occur to cause danger. Alternatively, when storage in a roll in a state in which the surface of the base material layer (A) and the pressure-sensitive adhesive layer contact each other is performed, the surface of the base material layer (A) from which the polymer particles each having a large particle diameter protrude contacts the pressure-sensitive adhesive layer, and hence the surface of the pressure-sensitive adhesive layer roughens and the adhesion of the pressure-sensitive adhesive layer reduces in some cases.

«Base material layer (A) >>

Thebasemateriallayer (A) containsthepolyolefin-basedresin as a main component. That is, the content of the polyolefin-based resin in the base material layer (A) is preferably 50 to 99.9 wt%, more preferably 80 to 99.9 wt%, still more preferably 85 to 99.7 wt%, particularly preferably 90 to 99.5 wt%. When the content of the polyolefin-based resin in the base material layer (A) is smaller than 50 wt% or larger than 99. wt%, the effect of the present invention may not be sufficiently expressed.

Any appropriate polyolefin-based resin can be adopted as the polyolefin-based resin to be incorporated into the base material layer (A). Examples of the polyolefin-based resin include homopolymers such as a polyethylene, a polypropylene, a poly(1-butene), and a poly (4-methyl-1-pentene) ; and copolymers such as an ethylene-based copolymer and a propylene-based copolymer.

More specifically, examples of the above-mentioned polyethylene include a low-density polyethylene (LDPE), a linear, low-density polyethylene (LLDPE), and a high-density polyethylene (HDPE).

More specifically, examples of the above-mentioned polypropylene include: an isotactic polypropylene, an atactic polypropylene, and a syndiotactic polypropylene; propylene-based copolymers such as a block copolymer, a random copolymer, and a graft copolymer as copolymers of propylene in each of which an ethylene component or an α-olefin component is used as a component of the copolymer; and a reactor TPO.

More specifically, examples of the above-mentioned copolymer include an ethylene/propylene copolymer, an ethylene/1-butene copolymer, an ethylene/1-hexene copolymer, an ethylene/4-methyl-1-pentene copolymer, an ethylene/1-octene copolymer, an ethylene/methyl acrylate copolymer, an ethylene/methyl methacrylate copolymer, an ethylene/vinyl acetate copolymer, an ethylene/ethyl acrylate copolymer, and an ethylene/vinyl alcohol copolymer.

The base material layer (A) may contain any appropriate resin except the polyolefin-based resin to such an extent that the effect of the present invention is not impaired.

The base material layer (A) may contain any appropriate additive. Examples of such additive include a filler, a pigment, a UV absorbing agent, an antioxidant, a thermal stabilizer, a lubricant, and a release agent (backside release agent).

The base material layer (A) preferably contains the above-mentioned polymer fine particles at a content of 0.1 to 20 wt% with respect to 100 parts by weight of the above-mentioned polyolefin-based resin. The content of the above-mentioned polymer fine particles in the base material layer (A) with respect to 100 parts by weight of the above-mentioned polyolefin-based resin is more preferably 1 to 15 wt% and still more preferably 1 to 10 wt %. When the content of the above-mentioned polymer fine particles in the base material layer (A) with respect to 100 parts by weight of the above-mentioned polyolefin-based resin is controlled so as to fall within the range of 1 to 20 wt%, blocking resistance between the surface of the base material layer (A) and the surface of an adherend laminated to contact the surface is high, and slipping property is moderately excellent. In addition, even when storage in a roll in a state in which the surface of the base material layer (A) and the pressure-sensitive adhesive layer contact each other is performed, the roughening of the surface of the pressure-sensitive adhesive layer can be suppressed, and the adhesion of the pressure-sensitive adhesive layer reduces to a small extent.

When the content of the above-mentioned polymer fine particles in the base material layer (A) with respect to 100 parts by weight of the above-mentioned polyolefin-based resin is smaller than 0.1 wt%, the blocking resistance between the surface of the base material layer (A) and the surface of the adherend laminated to contact the surface may be poor, or the slipping property may deteriorate. When the content of the above-mentioned polymer fine particles in the base material layer (A) with respect to 100 parts by weight of the above-mentioned polyolefin-based resin is larger than 20 wt%, the slipping property becomes excessively good. Accordingly, when a metal plate or the like is laminated on the base material layer (A), plate displacement (such as an over size) may occur to cause danger.

The surface of the base material layer (A) has a surface roughness Ra of 0.15 to 0.60 μm, preferably 0.18 to 0.50 μm, more preferably 0.20 to 0.40 μm. When the surface roughness Ra of the surface of the base material layer (A) is controlled so as to fall within the range of 0.15 to 0.60 μm, blocking resistance between the surface of the base material layer (A) and the surface of an adherend laminated to contact the surface is high, and slipping property is moderately excellent. In addition, even when storage in a roll in a state in which the surface of the base material layer (A) and the pressure-sensitive adhesive layer contact each other is performed, the roughening of the surface of the pressure-sensitive adhesive layer can be suppressed, and the adhesion of the pressure-sensitive adhesive layer reduces to a small extent.

When the surface roughness Ra of the surface of the base material layer (A) is smaller than 0.15 $\mu$m, the blocking resistance between the surface of the base material layer (A) and the surface of the adherend laminated to contact the surface may be poor, or the slipping property may deteriorate. When the surface roughness Ra of the surface of the base material layer (A) is larger than 0.60 $\mu$m, the slipping property becomes excessively good. Accordingly, when a metal plate or the like is laminated on the base material layer (A), plate displacement (such as an over size) may occur to cause danger, or a dent may be produced in the metal plate or the like.

The surface of the base material layer (A) has a coefficient of dynamic friction (I) with respect to an aluminum plate of 0.35 to 1.00, preferably 0.40 to 0.80, more preferably 0.45 to 0.75. When the coefficient of dynamic friction (I) of the surface of the base material layer (A) with respect to the aluminum plate is controlled so as to fall within the range of 0.35 to 1.00, blocking resistance between the surface of the base material layer (A) and the surface of an adherend laminated to contact the surface is high, and slipping property is moderately excellent. In addition, even when storage in a roll in a state in which the surface of the base material layer (A) and the pressure-sensitive adhesive layer contact each other is performed, the roughening of the surface of the pressure-sensitive adhesive layer can be suppressed, and the adhesion of the pressure-sensitive adhesive layer reduces to a small extent.

When the coefficient of dynamic friction (I) of the surface of the base material layer (A) with respect to the aluminum plate is smaller than 0.35, the slipping property becomes excessively good. Accordingly, when a metal plate or the like is laminated on the base material layer (A), plate displacement (such as an over size) may occur to cause danger. When the coefficient of dynamic friction (I) of the surface of the base material layer (A) with respect to the aluminum plate is larger than 1.00, the blocking resistance between the surface of the base material layer (A) and the surface of the adherend laminated to contact the surface may be poor, or the slipping property may deteriorate.

The surface of the base material layer (A) may be subjected to an easy-adhesion treatment such as a corona treatment or a plasma treatment.

The base material layer (A) has a thickness of preferably 2 to 300 $\mu$m, more preferably 3 to 250 $\mu$m, still more preferably 5 to 200 $\mu$m. When the thickness of the base material layer (A) is smaller than 2 $\mu$m, the base material layer (A) may break or tear upon use and peeling of the surface protective sheet of the present invention. When the thickness of the base material layer (A) is larger than 300 $\mu$m, the stiffness of the base material layer (A) is raised, and hence the lifting or the like of the surface protective sheet may be apt to occur after its attachment.

«Method of producing base material for surface protective sheet»

The base material for a surface protective sheet of the present invention can be produced by any appropriate production method.

When the base material for a surface protective sheet of the present invention is formed only of one layer, i.e., the base material layer (A) , a production method for the base material is, for example, a method involving: mixing the polyolefin-based resin and the polymer fine particles, and as required, any other component serving as materials for the base material layer (A) ; and forming the mixture into a sheet shape by any appropriate forming method that can be employed in sheet forming. Examples of such forming method include an inflation molding method and an extrusion molding method involving the use of a T-die.

When the base material for a surface protective sheet of the present invention is a laminate formed of the base material layer (A) and one or more other base material layers, a production method for the base material is, for example, a method involving forming a mixture of materials for each of the base material layer (A) and the one or more other base material layers into a sheet shape by such forming method as described above and laminating the resultant respective sheets to turn the sheets into an integrated laminate, or a method involving preparing a mixture of materials for each of the base material layer (A) and the one or more other base material layers, and turning the mixtures into an integrated laminate by a co-extrusion molding method. Examples of the co-extrusion molding method include a co-extrusion molding method involving employing the inflation molding method and a co-extrusion molding method involving the use of a T-die.

B. Surface protective sheet

«Outline of surface protective sheet»

The surface protective sheet of the present invention has the base material for a surface protective sheet of the present invention and a pressure-sensitive adhesive layer.

A separator may be attached to the surface of the pressure-sensitive adhesive layer in the surface protective sheet of the present invention for the purpose of, for example, protecting a pressure-sensitive adhesive surface. Any appropriate separator can be adopted as such separator. Examples of such separator include a plastic film and paper.

Of those, the plastic film is preferred because of, for example, its surface smoothness superior to that of the other.

In a more preferred embodiment, the surface protective sheet of the present invention is such that the base material layer (A) in the base material for a surface protective sheet of the present invention is one of the outermost layers and the pressure-sensitive adhesive layer or the pressure-sensitive adhesive layer with the separator is the other of the outermost layers.

The surface protective sheet of the present invention may include any appropriate other layer (one layer or a plurality of layers) between the base material for a surface protective sheet of the present invention and the pressure-sensitive adhesive layer.

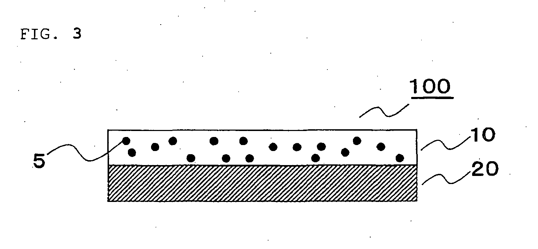

FIG. **3** is a schematic sectional view of a surface protective sheet according to a preferred embodiment of the present invention. The embodiment illustrated in FIG. **3** is an embodiment in which a surface protective sheet **100** is formed of the base material **10** for a surface protective sheet formed only of one layer, i.e., the base material layer (A) **1** and a pressure-sensitive adhesive layer **20**. The base material layer (A) **1** contains the polymer fine particles **5**.

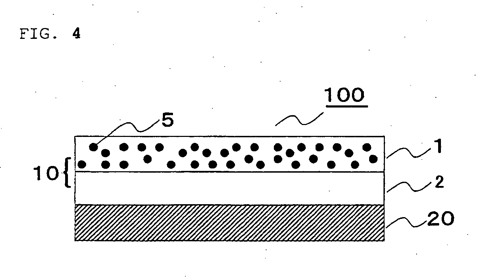

FIG. **4** is a schematic sectional view of a surface protective sheet according to another preferred embodiment of the present invention. The embodiment illustrated in FIG. **4** is an embodiment in which a surface protective sheet **100** is formed of the base material **10** for a surface protective sheet formed of two layers, i.e., the base material layer (A) **1** and another base material layer **2** and a pressure-sensitive adhesive layer **20**. The base material layer (A) **1** contains the polymer fine particles **5**.

Any appropriate thickness can be adopted as the thickness of the surface protective sheet of the present invention depending on purposes. The thickness of the surface protective sheet of the present invention is preferably 2 to 300 μm, more preferably 3 to 250 μm, still more preferably 5 to 200 μm in consideration of handleability.

«Pressure-sensitive adhesive layer»

Any appropriate pressure-sensitive adhesive can be adopted as a pressure-sensitive adhesive of which the pressure-sensitive adhesive layer is formed. Examples of the above-mentioned pressure-sensitive adhesive include: an acrylic pressure-sensitive adhesive using an acrylic resin as a main component (base polymer) ; a silicone-based pressure-sensitive adhesive using a silicone-based resin as a main component (base polymer); a rubber-based pressure-sensitive adhesive using a natural rubber as a main component (base polymer); and a rubber-based pressure-sensitive adhesive using a synthetic rubber as a main component (base polymer). Only one kind of those pressure-sensitive adhesives may be used, or two or more kinds of them may be used in combination.

Examples of the acrylic resin serving as the main component of the acrylic pressure-sensitive adhesive include: a polyacrylic acid; a polymethacrylic acid; polyacrylic acid esters such as a polymethyl acrylate and a polyethyl acrylate; polyacrylic acid esters such as a polymethyl methacrylate, a polyethyl methacrylate, and a polybutyl methacrylate; a polyacrylonitrile; random copolymers; a polymethyl methacrylate-polybutyl acrylate-polymethyl methacrylate copolymer (PMMA-PBA-PMMA copolymer); and block copolymers such as a PMMA-functional group-containing PBA-PMMA copolymer having carboxylic acid as a functional group in a polybutyl acrylate. For example, there may be used, as the acrylic resin, a commercially available product such as a product available under the trade name "NABSTAR" from Kaneka Corporation or a product available under the trade name "LA polymer" from KURARAY CO., LTD.

Examples of the silicone-based resin serving as the main component of thesilicone-based pressure-sensitive adhesive include a dimethylpolysiloxane.

Examples of the synthetic rubber serving as the main component of the rubber-based pressure-sensitive adhesive include: an olefin copolymer; an aromatic group-containing olefin-diene copolymer or a hydrogenated product of the copolymer; a diene copolymer or a hydrogenated product of the copolymer; and an aromatic group-containing olefin-olefin copolymer.

Examples of the olefin copolymer include an α-olefin copolymer having, as its main component, at least two kinds of α-olefins selected from α-olefins each having 2 to 12 carbon atoms. Examples of such α -olefin having 2 to 12 carbon atoms include ethylene, propylene, 1-butene, 1-pentene, 3-methyl-1-butene, 1-hexene, 4-methyl-1-penetene, 3-methyl-1-pentene, 1-heptene, 1-octene, 1-decene, and 1-dodecene. Specific examples of the olefin copolymer include an ethylene/propylene copolymer, a propylene/1-butene copolymer, an ethylene/propylene/1-butene copolymer, a propylene/1-butene/4-methyl-1-pentene copolymer, and an ethylene/propylene/4-methyl-1-pentene copolymer.

Examples of the aromatic group-containing olefin/diene copolymer or the hydrogenated product of the copolymer include a styrene-butadiene block copolymer (SB), a styrene-ethylene-butylene block copolymer (SEB), a styrene-isoprene block copolymer (SI), a styrene-ethylene-propylene block copolymer (SEP), a styrene-butadiene-styrene block copolymer (SBS), a styrene-ethylene-butylene-styrene block copolymer (SEBS), a styrene-isoprene-styrene block copolymer (SIS), a styrene-ethylene-propylene-styrene block copolymer (SEPS), a styrene-butadiene random copolymer (SBR), a styrene-ethylene-butylene random copolymer (HSBR), and hydrogenated products of the copolymers. A commercially available product of the aromatic group-containing olefin/diene copolymer or the hydrogenated product of the copolymer is, for example, products available under the trade names "Kraton D" and "Kraton G" from Kraton Polymers and a product available under the trade name "SEPTON" from KURARAY CO., LTD.

Examples of the diene copolymer or the hydrogenated product of the copolymer include a 1,4-butadiene/1,2-butadiene/1,4-butadiene block copolymer, an ethylene-ethylene-butylene-ethylene block copolymer (CEBC), and hydrogenated products of the copolymers. A commercially available product of the diene copolymer or the hydrogenated product of the copolymer is, for example, a product available under the trade name "Dynaron" from JSR Corporation.

Examples of the aromatic group-containing olefin/olefin copolymer include a styrene-isobutylene block copolymer (SIB) and a styrene-isobutylene-styrene block copolymer (SIBS). A commercially available product of the aromatic group-containing olefin/olefin copolymer is, for example, a product available under the trade name "SIBSTAR" from Kaneka Corporation.

Only one kind of the various resins serving as the main components of the pressure-sensitive adhesives described above may be used, or two or more kinds of them may be used in combination.

The pressure-sensitive adhesive layer can contain any appropriate other component as required. The other component is, for example, any appropriate, powdery, particulate, or foil-shaped additive. Examples of such additive include: a softening agent; a tackifier; a surface-lubricating agent; a leveling agent; an antioxidant; a corrosion inhibitor; a light stabilizer; a UV absorbing agent; a thermal stabilizer; a polymerization inhibitor; a silane coupling agent; a lubricant; an inorganic or organic filler; a metal powder; and a pigment.

The compounding of the tackifier is effective in improving an adhesive strength. The compounding amount of the tackifier is suitably determined to be any appropriate compounding amount depending on an adherend to which the surface protective sheet of the present invention is attached in order that the emergence of an adhesive residue problem due to a reduction in cohesive strength may be avoided. In ordinary cases, the compounding amount of the tackifier is preferably 200 parts by weight or less, more preferably 100 parts by weight or less, still more preferably 10 to 80 parts by weight with respect to 100 parts by weight of the base polymer of the pressure-sensitive adhesive. When the compounding amount of the tackifier exceeds 200 parts by weight with respect to 100 parts by weight of the base polymer of the pressure-sensitive adhesive, adhesion at low temperatures may be poor or an adhesive residue at high temperatures may become remarkable.

Examples of the tackifier include: petroleum-based resins such as an aliphatic copolymer, an aromatic copolymer, an aliphatic/aromatic copolymer system, and an alicyclic copolymer; coumarone-indene-based resins; terpene-based resins; terpene-phenol-based resins; rosin-based resins such as polymerized rosin; (alkyl) phenol-based resins; xylene-based resins; and hydrogenated products of those resins. Only one kind of the tackifiers may be used, or two or more kinds of them may be used in combination.

A hydrogenated tackifier such as an "ARKON P-125" manufactured by Arakawa Chemical Industries, Ltd. is preferably used as the tackifier in terms of, for example, peeling property and weatherability. It should be noted that a product available as a blend with an olefin resin or thermoplastic elastomer can also be used as the tackifier.

The compounding of the softening agent is effective in improving the adhesive strength, in particular, the adhesive strength for a rough-surface adherend. Examples of the softening agent include a low-molecular-weight diene-based polymer, a polyisobutylene, a polybutene, a hydrogenated polyisoprene, a hydrogenated polybutadiene, and derivatives of them. Examples of the derivatives include those each having an OH group or COOH group on one of, or each of both of, its terminals. Specific examples of the softening agent include a product available under the trade name "Polybutene" from Idemitsu Kosan Co., Ltd. and a product available under the trade name "Kuraprene" from KURARAY CO., LTD. Only one kind of those softening agents may be used, or two or more kinds of them may be used in combination.

The molecular weight of the softening agent can be suitably set to any appropriate value. When the molecular weight of the softening agent is excessively small, the small molecular weight may cause, for example, the transfer of a substance from the pressure-sensitive adhesive layer to the adherend or heavy peeling. On the other hand, when the molecular weight of the softening agent is excessively large, an improving effect on the adhesive strength tends to be poor. Accordingly, the number-average molecular weight of the softening agent is preferably 1000 to 100, 000, more preferably 3000 to 50,000.

When the softening agent is compounded, any appropriate amount can be adopted as its compounding amount. When the compounding amount of the softening agent is excessively large, the amount of an adhesive residue at the time of exposure to high temperatures or outdoors tends to increase. Accordingly, the compounding amount is preferably 100 parts by weight or less, more preferably 80 parts by weight or less, still more preferably 50 parts by weight or less with respect to 100 parts by weight of the base polymer of the pressure-sensitive adhesive.

One, or each of both, of the surfaces of the above-mentioned pressure-sensitive adhesive layer may be subjected to a surface treatment as required for, for example, controlling the adhesion or improving the attaching workability. Examples of the surface treatment include a corona discharge treatment, a UV irradiation treatment, a flame treatment, a plasma treatment, and a sputter etching treatment.

The thickness of the pressure-sensitive adhesive layer is preferably 0.5 $\mu$m to 50 $\mu$m, more preferably 1 $\mu$m to 40 $\mu$m, still more preferably 3 $\mu$m to 30 $\mu$m. When the thickness of the pressure-sensitive adhesive layer is smaller than 0.5 $\mu$m, adhesion for a stainless plate or the like subjected to a hairline treatment may be poor. When the thickness of the pressure-sensitive adhesive layer is larger than 50 μm, such economic disadvantage that an increase in cost becomes remarkable may arise.

«Method of producing surface protective sheet»

The surface protective sheet of the present invention can be produced by any appropriate production method.

One particularly preferred embodiment for the production of the surface protective sheet of the present invention is, for example, a method involving turning the base material for a surface protective sheet and the pressure-sensitive adhesive layer into an integrated laminate by a co-extrusion molding method, i.e., a method involving preparing a mixture of materials for the base material for a surface protective sheet (a mixture of materials for each layer is prepared when the base material is formed of a plurality of layers) and a mixture of materials for the pressure-sensitive adhesive layer, and turning the mixtures into an integrated laminate by the co-extrusion molding method. Examples of the co-extrusion molding method include a co-extrusion molding method involving employing an inflation molding method and a co-extrusion molding method involving the use of a T-die. When the base material for a surface protective sheet and the pressure-sensitive adhesive layer are turned into an integrated laminate by the co-extrusion molding method, a production process can be simplified, a production cost can be reduced, and the quality of the resultant surface protective sheet can be improved.

Another preferred embodiment for the production of the surface protective sheet of the present invention is, for example, a solution application method involving applying a solution of a mixture of materials for the pressure-sensitive adhesive layer to the surface of the base material for a surface protective sheet of the present invention that has been prepared in advance. Examples of such solution application method include a roll coating method, a gravure coating method, a reverse coating method, a roll brush method, a spray coating method, an air knife coating method, and an extrusion coating method involving the use of a die coater or the like. When such solution application method is performed, the surface of the base material for a surface protective sheet may be subjected to a surface treatment for improving adhesion between the base material for a surface protective sheet and the pressure-sensitive adhesive layer in advance in order that the adhesion may be improved.

C. Applications

The base material for a surface protective sheet of the present invention and the surface protective sheet of the present invention can find applications in the surface protection of various members. For example, the base material and the surface protective sheet find applications in the protection of the surfaces of the various members by being attached to the surfaces upon conveyance, processing, aging, or the like of the members. Those members include: members such as metal plates, painted plates (coated plate) , aluminum sashes, resin plates, decorative steel plates, vinyl chloride-laminated steel plates, and glass plates; optical members such as polarizing films and liquid crystal panels; and electronic members. In particular, the base material and the surface protective sheet find applications preferably in the protection of the surfaces of the metal plates such as a stainless plate, an aluminum plate, and a steel plate, and the resin plates, and particularly preferably in the protection of the surfaces of the metal plates such as a stainless plate, an aluminum plate, and a steel plate.

Examples

Hereinafter, the present invention is specifically described by way of examples. However, the present invention is by no means limited by these examples. It should be noted that, in the examples and the like, test and evaluation methods are as described below, and the term "part(s)" means "part(s) by weight".

<Measurement of surface roughness Ra>

A surface roughness Ra was determined as a ten-point average by using values measured in conformity with JIS-B0651. More specifically, the measurement was performed with a stylus surface roughness-measuring instrument (P-15 manufactured by KLA-Tencor Corporation, measurement direction: a stylus was moved vertically to the stretching direction of a film, measurement range: 8 mm, stylus travelling speed: 50 μm/sec, stylus pressure: 6 mg), and then the ten-point average was determined and adopted as the Ra.

<Measurement of coefficient of dynamic friction (I)>

An aluminum plate (A1050P manufactured by Sumitomo Light Metal Industries, Ltd.) was placed on a horizontal table, and then an iron jig to which a surface protective sheet described in each of examples and comparative examples had been attached (contact area: 25 cm$^2$, load: 19. 6 N) was mounted on the aluminum plate so that the back surface side of the surface protective sheet contacted the aluminum plate. After that, the maximum shear frictional force (N) upon tension of the resultant with a tensile tester (tension speed: 0.3 m/min) by a distance of 100 mm was measured.

A coefficient of dynamic friction (I) was calculated from the following equation.

$$\text{Coefficient of dynamic friction (I)} = \text{maximum shear frictional force (N)/load (N)}$$

<Evaluation of surface of aluminum plate for presence or absence of scratches>

The presence or absence of scratches in the surface of the aluminum plate after the measurement of the coefficient of dynamic friction (I) described above was visually observed. The case where a scratch was observed was evaluated as "present" and the case where nearly no scratches were observed or no scratches were observed was evaluated as "absent".

[Example 1]

A product obtained by adding 2 parts by weight of cross-linked polymethyl methacrylate fine particles having an average particle diameter of 10 $\mu$m (Uni-Powder NMB-1020 manufactured by JX Nippon Oil & Energy Corporation) to 100 parts by weight of a linear, low-density polyethylene (Evolue SP2520 manufactured by Prime Polymer Co., Ltd.) was formed into a sheet shape by an inflation method at a die temperature of 200°C. Thus, a base material for a surface protective sheet was produced. The base material for a surface protective sheet had a thickness of 60 $\mu$m.

After that, one surface of the resultant base material for a surface protective sheet was subjected to a corona treatment.

Next, 3 parts by weight of an isocyanate-based cross-linking agent (Coronate L manufactured by Nippon Polyurethane Industry Co., Ltd.) were added to an ethyl acetate solution containing 100 parts by weight of an acrylic pressure-sensitive adhesive (having a weight-average molecular weight in terms of polystyrene of 600, 000) containing 30 wt% of 2-ethylhexyl acrylate (2EHA), 60 wt% of ethyl acrylate (EA), 6 wt% of methyl methacrylate (MMA), and 4 wt% of 2-hydroxyethylacrylate (HEA). Thus, an acrylic pressure-sensitive adhesive solution was prepared.

The above-mentioned acrylic pressure-sensitive adhesive solution was applied to the corona-treated surface side of the above-mentioned base material for a surface protective sheet so that a pressure-sensitive adhesive layer after drying had a thickness of 10 $\mu$m. Then, the applied solution was dried. Thus, a surface protective sheet (1) was obtained.

The surface roughness Ra and coefficient of dynamic friction (I) of the surface protective sheet (1) were measured, and the surface of the aluminum plate was evaluated for the presence or absence of scratches. Table 1 shows the results.

[Example 2]

A product obtained by adding 1 part by weight of cross-linked polystyrene fine particles having an average particle diameter of 8 $\mu$m (TECHPOLYMER SBX-8 manufactured by Sekisui Plastics Co. , Ltd.) to 100 parts by weight of a low-density polyethylene (Petrocene 212 manufactured by TOSOH CORPORATION) was prepared as a raw material for the base material layer (A).

A polypropylene (WINTEC WFX4 manufactured by Japan Polypropylene Corporation) was separately prepared as a raw material, for a base material layer (B).

The base material layer (A) and the base material layer (B) were subjected to two-layer co-extrusion molding by a T-die method at a die temperature of 220°C. Thus, a two-layer base material for a surface protective sheet was produced. The base material layer (A) had a thickness of 10 $\mu$m and the base material layer (B) had a thickness of 50 $\mu$m.

After that, the base material layer (B) surface side of the resultant two-layer base material for a surface protective sheet was subjected to a corona treatment.

Next, a styrene-isobutylene-styrene block copolymer (SIBSTAR 072T manufactured by KANEKA CORPORATION) was dissolved in toluene. Thus, a pressure-sensitive adhesive solution was prepared.

The above-mentioned pressure-sensitive adhesive solution was applied to the corona-treated surface side of the above-mentioned two-layer base material for a surface protective sheet so that a pressure-sensitive adhesive layer after drying had a thickness of 10 um. Then, the applied solution was dried. Thus, a surface protective sheet (2) was obtained.

The surface roughness Ra and coefficient of dynamic friction (I) of the surface protective sheet (2) were measured, and the surface of the aluminum plate was evaluated for the presence or absence of scratches. Table 1 shows the results.

[Example 3]

A product obtained by adding 5 parts by weight of cross-linked polymethyl methacrylate fine particles having an average particle diameter of 5 $\mu$m (TAFTIC FHS-005 manufactured by TOYOBO Co., Ltd.) to 100 parts by weight of a low-density polyethylene (Petrocene 212 manufactured by TOSOH CORPORATION) was prepared as a raw material for the base material layer (A).

A polyethylene (Petrocene 204 manufactured by TOSOH CORPORATION) was separately prepared as a raw material for a base material layer (B).

Further, a product obtained by adding 30 parts by weight of a petroleum resin (Clearon P-125 manufactured by YASUHARA CHEMICAL CO., LTD.) to 100 parts by weight of a styrene-ethylene-butylene-styrene block copolymer (Tuftec H1221 manufactured by Asahi Kasei Chemicals Corporation) was prepared as a raw material for a pressure-sensitive adhesive layer.

The base material layer (A), the base material layer (B), and the pressure-sensitive adhesive layer were subjected to three-layer co-extrusion molding by a T-die method at a die temperature of 200°C. Thus, a surface protective sheet (3) was obtained. The base material layer (A) had a thickness of 10 $\mu$m, the base material layer (B) had a thickness of 100 $\mu$m, and the pressure-sensitive adhesive layer had a thickness of 10 $\mu$m.

The surface roughness Ra and coefficient of dynamic friction (I) of the surface protective sheet (3) were measured, and the surface of the aluminum plate was evaluated for the presence or absence of scratches. Table 1 shows the results.

[Comparative Example 1]

A surface protective sheet (C1) was obtained in the same manner as in Example 1 except that synthetic silica fine particles having an average particle diameter of 5 $\mu$m were used instead of the cross-linked polymethyl methacrylate fine particles used in Example 1.

The surface roughness Ra and coefficient of dynamic friction (I) of the surface protective sheet (C1) were measured, and the surface of the aluminum plate was evaluated for the presence or absence of scratches. Table 1 shows the results.

[Comparative Example 2]

A surface protective sheet (C2) was obtained in the same manner as in Example 1 except that no fine particles were used instead of the cross-linked polymethyl methacrylate fine particles used in Example 1.

The surface roughness Ra and coefficient of dynamic friction (I) of the surface protective sheet (C2) were measured, and the surface of the aluminum plate was evaluated for the presence or absence of scratches. Table 1 shows the results.

[Comparative Example 3]

A surface protective sheet (C3) was obtained in the same manner as in Example 1 except that ultrahigh-molecular weight polyethylene fine particles (MIPELON XM 220 manufactured by Mitsui Chemicals, Inc.) having an average particle diameter of 25 $\mu$m were used instead of the cross-linked polymethyl methacrylate fine particles used in Example 1.

The surface roughness Ra and coefficient of dynamic friction (I) of the surface protective sheet (C3) were measured, and the surface of the aluminum plate was evaluated for the presence or absence of scratches. Table 1 shows the results.

[Comparative Example 4]

A surface protective sheet (C4) was obtained in the same manner as in Example 3 except that synthetic zeolite fine particles having an average particle diameter of 10 $\mu$m were used instead of the cross-linked polymethyl methacrylate fine particles used in Example 3.

The surface roughness Ra and coefficient of dynamic friction (I) of the surface protective sheet (C4) were measured, and the surface of the aluminum plate was evaluated for the presence or absence of scratches. Table 1 shows the results.

Table 1

|  | Example | | | Comparative Example | | | |
|---|---|---|---|---|---|---|---|
|  | 1 | 2 | 3 | 1 | 2 | 3 | 4 |
| Kind of particles | Cross-linked PMMA | Cross-linked PS | Cross-linked PMMA | Synthetic silica | None | Ultrahigh-molecular weight PE | Synthetic zeolite |
| Average particle diameter of particles ($\mu$m) | 10 | 8 | 5 | 5 | - | 25 | 10 |
| Surface roughness Ra ($\mu$m) | 0.36 | 0.25 | 0.22 | 0.34 | 0.12 | 0.66 | 0.34 |
| Coefficient of dynamic friction (I) | 0.56 | 0.71 | 0.46 | 0.66 | 1.07 | 0.32 | 0.60 |
| Presence or absence of scratches in surface of aluminum plate | Absent | Absent | Absent | Present | Absent | Absent | Present |

As shown in Table 1, the base material for a surface protective sheet of the present invention and the surface protective sheet of the present invention are found to have the following characteristics. The surface roughness Ra falls within the range of 0.15 to 0.60 $\mu$m, the coefficient of dynamic friction (I) falls within the range of 0.35 to 1. 00, the slipping property of the back surface of the sheet is moderately excellent, and scratches in the surface of an adherend laminated to contact the back surface of the sheet can be suppressed. On the other hand, it is found that, in each of Comparative Examples 1 and 4 where no polymer fine particles are used and inorganic fine particles are used, scratches are produced in the surface of an adherend laminated to contact the back surface of the sheet. In addition, in Comparative Example 3 where the ultrahigh-molecular weight PE fine particles having a large average particle diameter are used as polymer fine particles, the following is found. The surface roughness Ra becomes excessively large, the coefficient of dynamic friction (I) becomes excessively small, and the slipping property becomes excessively good. Accordingly, when a metal plate or the like is laminated on the surface protective sheet, plate displacement (such as an over size) occurs to cause danger. In addition, in Comparative Example 2 where no fine particles are used, the following is found. The surface roughness Ra becomes excessively small, the coefficient of dynamic friction (I) becomes excessively large, blocking resistance between the surface of the surface protective sheet and the surface of an adherend laminated to contact the surface becomes poor, and the slipping property deteriorates.

The base material for a surface protective sheet of the present invention and the surface protective sheet of the present invention can find applications in the surface protection of various members. For example, the base material and the surface protective sheet find applications in the protection of the surfaces of the various members by being attached to the surfaces upon conveyance, processing, aging, or the like of the members. Those members include: members such as metal plates, painted plates, aluminum sashes, resin plates, decorative steel plates, vinyl chloride-laminated steel plates, and glass plates; optical members such as polarizing films and liquid crystal panels; and electronic members.

**Claims**

1.  A base material for a surface protective sheet, comprising a base material layer (A), wherein:

    at least one surface of the base material for a surface protective sheet is a surface of the base material layer (A);
    the base material layer (A) contains a polyolefin-based resin as a main component;
    the base material layer (A) contains polymer fine particles, wherein the polymer fine particles contain at least one kind selected from the group consisting of a cross-linked polymethyl (meth)acrylate, a cross-linked polybutyl (meth)acrylate, and a cross-linked polystyrene, **characterized in that** the polymer fine particles have an average particle diameter of 4 to 15 $\mu$m at a content of 1 to 20 wt% with respect to 100 parts by weight of the polyolefin-based resin;
the surface of the base material layer (A) has a surface roughness Ra of 0.15 to 0.60 $\mu$m; and
the surface of the base material layer (A) has a coefficient of dynamic friction (I) with respect to an aluminum plate of 0.35 to 1.00, wherein the parameters surface roughness Ra and coefficient of dynamic friction (1) are determined according to the methods of measurement described in the description.

2. A base material for a surface protective sheet according to claim 1, wherein the base material has a thickness of 20 to 300 $\mu$m.

3. A base material for a surface protective sheet according to claim 1 or 2, wherein the base material layer (A) contains the polyolefin-based resin at a content of 50 to 99.9 wt%.

4. A surface protective sheet, comprising:

the base material for a surface protective sheet according to any one of claims 1 to 3; and
a pressure-sensitive adhesive layer,
wherein the base material layer (A) of the base material is one of the outermost layers and the pressure-sensitive adhesive layer or the pressure-sensitive adhesive layer with a separator which may be attached to the surface of the pressure-sensitive adhesive layer is the other of the outermost layers.

5. A surface protective sheet according to claim 4, wherein the pressure-sensitive adhesive layer has a thickness of 0.5 to 50 $\mu$m.

6. A surface protective sheet according to claim 4 or 5, wherein the surface protective sheet is produced by a co-extrusion method.

**Patentansprüche**

1. Basismaterial für ein Oberflächenschutzblatt, umfassend eine Basismaterialschicht (A), worin:

mindestens eine Oberfläche des Basismaterials für ein Oberflächenschutzblatt eine Oberfläche der Basismaterialschicht (A) ist,
die Basismaterialschicht (A) ein Harz auf Polyolefin-Basis als eine Hauptkomponente enthält,
die Basismaterialschicht (A) feine Polymerteilchen enthält, wobei die feinen Polymerteilchen mindestens eine Art enthalten, ausgewählt aus der Gruppe,
bestehend aus einem vernetzten Polymethyl(meth)acrylat, einem vernetzten Polybutyl(meth)acrylat und einem vernetzten Polystyrol, **dadurch gekennzeichnet, daß** die feinen Polymerteilchen einen durchschnittlichen Teilchendurchmesser von 4 bis 15 $\mu$m bei einem Anteil von 1 bis 20 Gew.-% bezüglich 100 Gew.-Teilen des Harzes auf Polyolefin-Basis aufweisen, die Oberfläche der Basismaterialschicht (A) eine Oberflächenrauhigkeit Ra von 0,15 bis 0,60 $\mu$m aufweist und
die Oberfläche der Basismaterialschicht (A) einen dynamischen Reibungskoeffizienten (I) bezüglich einer Aluminiumplatte von 0,35 bis 1,00 aufweist, wobei die Parameter der Oberflächenrauhigkeit Ra und des dynamischen Reibungskoeffizienten (I) gemäß den Bestimmungsverfahren, angegeben in der Beschreibung, bestimmt werden.

2. Basismaterial für ein Oberflächenschutzblatt gemäß Anspruch 1, wobei das Basismaterial eine Dicke von 20 bis 300 $\mu$m aufweist.

3. Basismaterial für ein Oberflächenschutzblatt gemäß Anspruch 1 oder 2, wobei die Basismaterialschicht (A) das Harz auf Polyolefin-Basis in einem Anteil von 50 bis 99,9 Gew.-% enthält.

4. Oberflächenschutzblatt, umfassend:

das Basismaterial für ein Oberflächenschutzblatt gemäß einem der Ansprüche 1 bis 3 und
eine Haftkleberschicht, wobei die Basismaterialschicht (A) des Basismaterials eine der äußersten Schichten ist und die Haftkleberschicht oder die Haftkleberschicht mit einem Separator, welcher an die Oberfläche der Haftkleberschicht angebracht ist, die andere der äußersten Schichten ist.

**5.** Oberflächenschutzblatt gemäß Anspruch 4, wobei die Haftkleberschicht eine Dicke von 0,5 bis 50 μm aufweist.

**6.** Oberflächenschutzblatt gemäß Anspruch 4 oder 5, wobei das Oberflächenschutzblatt durch ein Koextrusionsverfahren hergestellt worden ist.

**Revendications**

**1.** Matériau de base pour une feuille de protection de surface, comprenant une couche de matériau de base (A), dans lequel :

au moins une surface du matériau de base pour une feuille de protection de surface est une surface de la couche de matériau de base (A) ;
la couche de matériau de base (A) contient une résine à base de polyoléfine en tant que composant principal ;
la couche de matériau de base (A) contient des fines particules de polymère, dans lequel les fines particules de polymère contiennent au moins un type sélectionné à partir du groupe constitué par du polyméthyle méthacrylate réticulé, du polybutyle méthacrylate réticulé, et du polystyrène réticulé, **caractérisé en ce que** les fines particules de polymère présentent un diamètre moyen de particules de 4 à 15 μm et une teneur de 1 à 20 % en poids par rapport à 100 parties en poids de la résine à base de polyoléfine ; la surface de la couche de matériau de base (A) présente une rugosité de surface Ra de 0,15 à 0,60 μm ; et
la surface de la couche de matériau de base (A) présente un coefficient de frottement dynamique (I) par rapport à une plaque d'aluminium de 0,35 à 1,00, dans lequel les paramètres de rugosité de surface Ra et de coefficient de frottement dynamique (I) sont déterminés selon le procédé de mesure décrit dans la description.

**2.** Matériau de base pour une feuille de protection de surface selon la revendication 1, dans lequel le matériau de base présente une épaisseur de 20 à 300 μm.

**3.** Matériau de base pour une feuille de protection de surface selon la revendication 1 ou 2, dans lequel la couche de matériau de base (A) contient la résine à base de polyoléfine avec une teneur de 50 à 99,9 % en poids.

**4.** Feuille de protection de surface, comprenant :

le matériau de base pour une feuille de protection de surface selon l'une quelconque des revendications 1 à 3 ; et
une couche adhésive sensible à la pression,
dans laquelle la couche de matériau de base (A) du matériau de base est l'une des couches les plus à l'extérieur et la couche adhésive sensible à la pression ou la couche adhésive sensible à la pression avec un séparateur qui peut être lié à la surface de la couche adhésive sensible à la pression est l'autre des couches les plus à l'extérieur.

**5.** Feuille de protection de surface selon la revendication 4, dans laquelle la couche adhésive sensible à la pression présente une épaisseur de 0,5 à 50 μm.

**6.** Feuille de protection de surface selon la revendication 4 ou 5, dans laquelle la feuille de protection de surface est produite par un procédé par coextrusion.

FIG. 1

FIG. 2

FIG. 3

FIG. 4

**EP 2 368 952 B1**

## REFERENCES CITED IN THE DESCRIPTION

### Patent documents cited in the description

- JP 2009208416 A
- JP 2006096939 A
- JP 2008088248 A
- JP 2003213229 A